# EUROPEAN PATENT APPLICATION

(11) **EP 4 411 467 A1**
(43) Date of publication of application: **07.08.2024**
(21) Application number: 22872959.6
(22) Date of filing: 22.09.2022
(51) Int. Cl.: G02F 1/1339

(54) **CURABLE RESIN COMPOSITION FOR USE IN SEALING MATERIAL FOR FILM LIQUID CRYSTAL PANELS, AND FILM LIQUID CRYSTAL PANEL HAVING END SEALED WITH SAID CURABLE RESIN COMPOSITION**

(30) Priority: 27.09.2021 JP 2021157232
(71) Applicant: NOF Corporation, Shibuya-ku Tokyo 150-6019 (JP)
(72) Inventor: KOMATSUZAKI,Satoru, Chita-gun, Aichi 470-2373 (JP); TAKAHASHI,Naoshi, Chita-gun, Aichi 470-2373 (JP)
(74) Representative: Hoffmann Eitle
(86) International application number: PCT/JP2022/035308
(87) International publication number: WO 2023/048208

(57) **Abstract**

The present invention provides a curable resin composition which contains (A) a multifunctional thiol compound having 2 to 6 thiol groups, (B) a multifunctional urethane (meth)acrylate compound having 2 to 3 (meth)acrylic groups, (C) a multifunctional allyl compound having 2 to 4 (meth)allyl groups, (D) a spherical filler that has an average particle diameter of 15 µm or less and (E) a photopolymerization initiator, wherein: the blending mass ratio (B)/(C) is 0.1 to 1.0; the ratio of the thiol groups in the component (A) to the polymerizable unsaturated bonds in the components (B) and (C) is 0.5 to 3.0; and the amount of the component (D) is 1 to 50 parts by mass relative to a total of 100 parts by mass of the components (A) to (C). This curable resin composition does not contaminate liquid crystals even in cases where the curable resin composition in an uncured state comes into contact with the liquid crystals, while being capable of maintaining the shape on a base material for a long period of time; and in addition, alignment disturbance of liquid crystals is not caused even in cases where a cured product of this curable resin composition is in contact with the liquid crystals under harsh wet heat conditions. Consequently, this curable resin composition is used in a sealing material for film liquid crystal panels, the sealing material exhibiting excellent followability to a base material regardless of changes in the temperature environment.

## Description

### TECHNICAL FIELD

The present invention relates to a curable resin composition for use in a sealing material for a film liquid crystal panel. Specifically, the present invention relates to a curable resin composition for forming a sealing material for a film liquid crystal which does not contaminate the liquid crystal even in cases where the curable resin composition in an uncured state comes into contact with the liquid crystal, and can maintain its shape without wet-spreading or repelling on a base material for a long period of time, and in addition, which does not cause the alignment disorder of the liquid crystal even in a state where a cured product of the curable resin composition is in contact with the liquid crystal under harsh wet heat environment, and exhibits excellent conformance to a base material regardless of the change in the temperature environment. The present invention also relates to a film liquid crystal panel in which a sealing material including the curable resin composition is used.

### BACKGROUND ART

Liquid crystal panels are widely used for image display of various electronic devices such as mobile phones and personal computers. A liquid crystal panel usually includes a pair of glass base plates each having an electrode on the surface, a frame-shaped sealing material sandwiched between the glass base plates, and a liquid crystal layer surrounded by the sealing material.

Conventionally, a photocurable acrylic resin composition has been used as the sealing material. However, the conventional acrylic resin composition is excellent in workability and productivity, but has a problem that a large amount of outgas is generated in the production process, and the adhesiveness between the sealing material and the base material is deteriorated. Though a sealing material is required to protect a liquid crystal in harsh wet heat environment, conventional sealing materials including an acrylic resin composition have a problem that the liquid crystal is contaminated by moisture and a decomposition product of the sealing material under wet heat environment due to the low moisture barrier property and easy decomposition of the sealing material, and the alignment of the liquid crystal is disordered.

For these problems, it is known that by using a resin composition containing a thiol monomer having a thiol group and an ene monomer having a carbon-carbon double bond, occurrence of outgassing can be suppressed to improve adhesiveness of a sealing material (Patent Document 1). In Patent Document 1, it has been also confirmed that the alignment disorder of the liquid crystal does not occur even in a state where the sealing material and the liquid crystal are in contact with each other under harsh wet heat environment due to the improvement in the moisture barrier property and durability of the sealing material.

However, in the production of a liquid crystal panel, there is a method in which a resin composition for use in a sealing material in an uncured state is brought into contact with a liquid crystal. In such a method, the sealing material of Patent Document 1 has a problem that the resin component is eluted in the liquid crystal and contaminates the liquid crystal, and display defects occur.

In recent years, a film liquid crystal panel in which a flexible film material is used as a base material has attracted attention, and has been developed. Unlike sealing materials used for a rigid glass base plate, sealing materials used for this film liquid crystal panel are required to be rich in flexibility and toughness and conform to the film base material. Further, in view of practical use, this conformance is required even after an accelerated test simulating the change in the temperature environment to which the film liquid crystal panel can be exposed.

However, the sealing material of Patent Document 1 lacks flexibility and toughness, and has a problem that conformance to a flexible film base material is insufficient, and the sealing material is peeled off from the film in the accelerated test.

Further, from the viewpoint of improving the productivity of the liquid crystal panel, the resin composition for use in a sealing material is required to be free from wet-spreading or repelling on the base material after coating, but the sealing material of Patent Document 1 has a problem that repelling occurs on the base material.

### PRIOR ART DOCUMENT

### PATENT DOCUMENT

Patent Document 1: JP-A-2016-169298

### SUMMARY OF THE INVENTION

### PROBLEMS TO BE SOLVED BY THE INVENTION

The present invention has been achieved in view of the above circumstances, and an object of the present invention is to provide a curable resin composition for use in a sealing material for a film liquid crystal panel which does not contaminate the liquid crystal even in cases where the curable resin composition in an uncured state comes into contact with the liquid crystal, and can maintain its shape without wet-spreading or repelling on a base material for a long period of time, and in addition, which does not cause the alignment disorder of the liquid crystal even in a state where a cured product of the curable resin composition is in contact with the liquid crystal under harsh wet heat environment, and exhibits excellent conformance to a base material regardless of the change in the temperature environment, and to provide a film liquid crystal panel including the curable resin composition as a sealing material.

### MEANS FOR SOLVING THE PROBLEMS

In order to solve the above problems, the present inventors have conducted intensive studies and focused on the fact that a polyfunctional urethane (meth)acrylate compound has a high lyophobic property with the liquid crystal, and have found that by using a curable resin composition containing the urethane (meth)acrylate compound, a specific polyfunctional (meth)allyl compound, a polyfunctional thiol compound, and a spherical filler, a sealing material for a film liquid crystal panel, which does not contaminate the liquid crystal even in cases where the sealing material in an uncured state comes into contact with the liquid crystal, and can maintain its shape without wet-spreading or repelling on a base material for a long period of time, and in addition, does not cause the alignment disorder of the liquid crystal even in a state where the cured product is in contact with the liquid crystal under harsh wet heat environment is obtained. In addition, the present inventors have found that this sealing material has both flexibility and toughness, and is excellent in conformance to a base material regardless of the change in the temperature environment, and have completed the present invention.

That is, the present invention is the following [1] to [2].
[1] A curable resin composition for use in a sealing material for a film liquid crystal panel, including the following components (A) to (E):
   (A) a polyfunctional thiol compound having 2 to 6 thiol groups;
   (B) a polyfunctional urethane (meth)acrylate compound having 2 to 3 (meth)acrylic groups;
   (C) a polyfunctional allyl compound having 2 to 4 (meth)allyl groups;
   (D) a spherical filler having an average particle diameter of 15 um or less; and
   (E) a photopolymerization initiator,

   wherein a blending mass ratio (B)/(C) of (B) to (C) is 0.1 to 1.0,
   a ratio of a functional group concentration of thiol groups of (A) to a sum of a functional group concentration of a polymerizable unsaturated bond of (B) and a functional group concentration of a polymerizable unsaturated bond of (C) (thiol group/polymerizable unsaturated bond) is 0.5 to 3.0, and
   an amount of (D) is 1 to 50 parts by mass relative to a total of 100 parts by mass of (A), (B), and (C).
[2] A film liquid crystal panel having an end sealed with the curable resin composition according to [1] above.

In the present invention, the "(meth)allyl compound" means a generic term including both a compound having an allyl group and a compound having a methallyl group, and the same applies to the "(meth)acrylic group" and the like. In the present invention, "○○ to ××" indicating a numerical range is a concept including a lower limit value ("OO") and an upper limit value ("××") thereof unless otherwise specified. That is, it means exactly "○○ or more and ×× or less".

### EFFECT OF THE INVENTION

According to the present invention, it is possible to provide a curable resin composition for use in a sealing material for a film liquid crystal panel which does not contaminate the liquid crystal even in cases where the curable resin composition in an uncured state comes into contact with the liquid crystal, and can maintain its shape without wet-spreading or repelling on a base material for a long period of time, and in addition, which does not cause the alignment disorder of liquid crystal even in a state where a cured product of the curable resin composition is in contact with the liquid crystal under harsh wet heat environment, and exhibits excellent conformance to a base material regardless of the change in the temperature environment. There is also provided a film liquid crystal panel including the curable resin composition as a sealing material.

### MODE FOR CARRYING OUT THE INVENTION

Hereinafter, the present invention will be described in detail. The curable resin composition of the present invention is used for a sealing material for a film liquid crystal panel, and includes the following (A), (B), (C), (D), and (E) as essential components.

### <Polyfunctional thiol compound (A)>

The polyfunctional thiol compound (A) is a compound having 2 to 6 thiol groups. The polyfunctional thiol compound (A) can be used alone or in combination of two or more types thereof. By such a compound being contained, the thiol-ene reaction proceeds with other components, and curability can be increased. The formed thioether bond can flexibly change the bond angle as compared with a bond of an atom such as C, O, or N, thus the cured product has high flexibility, and the conformance of the sealing material to the base material can be increased. A cured product formed of the thioether bond has a high bond angle flexibility, and can be cured at a high density so that atoms fill gaps between bonds. Therefore, the cured product has a high moisture barrier property, and can prevent the alignment disorder of the liquid crystal without being affected by moisture even after a wet heat test.

The polyfunctional thiol compound (A) is preferably a compound represented by the following Formula 1.

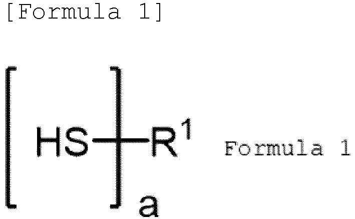

(In the formula, a is an integer of 2 to 6, and R¹ is a 2 to 6 valent organic group having 10 to 60 carbon atoms.)

In the formula, a is preferably an integer of 3 to 6 from the viewpoint of increasing the moisture barrier property of a sealing material for a film liquid crystal panel and suppressing the alignment disorder of the liquid crystal even under exposure to a harsh wet heat test. When a in the formula is within this range, shrinkage on curing does not increase and the conformance to the base material after curing does not decrease, and a good cured product is obtained. From the same viewpoint, R¹ is preferably 3 to 6 valent. The carbon number of R¹ is 10 to 60, preferably 10 to 45, and more preferably 12 to 30. When the carbon number of R¹ is within this range, the crosslinking density of the cured product of the curable resin composition is sufficient, the sealing material is excellent in the moisture barrier property, and the alignment disorder of the liquid crystal can be suppressed even under exposure to a harsh wet heat test.

The organic group is a group that contains C and can further contain at least one element selected from the group consisting of Si, N, P, O, and S. The organic group can be a polymer having a repeating unit. In the structure, a group such as a ketone group, an ester group, an ether group, a hydroxyl group, an amide group, a thioether group, an isocyanurate group, or a glycoluril can be also contained.

Specific examples of the polyfunctional thiol compound (A) include dipentaerythritol hexakis(3-mercaptopropionate), trimethylolpropane tris(2-mercaptoacetate), trimethylolpropane tris(3-mercaptopropionate), trimethylolethane tris(2-mercaptoacetate), trimethylolethane tris(3-mercaptopropionate), pentaerythritol tetrakis(2-mercaptoacetate), pentaerythritol tetrakis(3-mercaptopropionate), 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(2-mercaptoethylthiomethyl)methane, tetrakis(3-mercaptopropylthiomethyl)methane, 1,3,5-tris(mercaptoethyleneoxy)benzene, and tris-[(3-mercaptopropionyloxy)-ethyl]-isocyanurate.

Among the compounds represented by the Formula 1 above, polyfunctional thiols having a pentaerythritol skeleton, polyfunctional thiols having a dipentaerythritol skeleton, and polyfunctional thiols having an isocyanurate skeleton are preferable.

Among them, dipentaerythritol hexakis(3-mercaptopropionate), pentaerythritol tetrakis(3-mercaptopropionate), and tris-[(3-mercaptopropionyloxy)-ethyl]-isocyanurate are preferable because the moisture barrier property of the sealing material can be increased, the alignment disorder of the liquid crystal can be suppressed even under exposure to a harsh wet heat test, the flexibility of the cured product of the curable resin composition can be increased, and the conformance of the sealing material to the base material can be increased.

As the polyfunctional thiol compound (A), a commercially available product can be used, or a synthesized product can be used. As the synthesis method, for example, the polyfunctional thiol compound (A) can be obtained by esterifying a polyhydric alcohol such as pentaerythritol with a mercapto group-containing carboxylic acid such as 3-mercaptopropionic acid by a known method.

### <Polyfunctional urethane (meth)acrylate compound (B)>

The polyfunctional urethane (meth)acrylate compound (B) is obtained by reacting a diisocyanate compound, a polyol compound, and a (meth)acrylate compound having a hydroxyl group by a known method. The polyfunctional urethane (meth)acrylate compound (B) can be used alone or in combination of two or more types thereof. Such a compound has a high lyophobic property with the liquid crystal, and thus when such a compound is contained, the solubility of the uncured curable resin composition in the liquid crystal is reduced, and contamination of the liquid crystal can be prevented even when the curable resin composition comes into contact with the liquid crystal for a long period of time. In addition, the cured product of the curable resin composition can be toughened, and the conformance of the sealing material to the base material can be increased. In addition, the urethane group contained can exhibit a strong interaction such as hydrogen bonding between urethane groups and between urethane groups and other polar groups in a low temperature zone of -30°C or lower to a high temperature zone of about 100°C, and thus the cured product of the curable resin composition is toughened regardless of the temperature environment, and the conformance of the sealing material to the base material can be increased. The polyfunctional urethane (meth)acrylate compound (B) is a compound having 2 to 3 (meth)acrylic groups, and when the number of (meth)acrylic groups is in this range, the cured product of the curable resin composition does not become rigid, the conformance of the sealing material to the base material can be increased, the polarity is not excessively increased, and compatibility with other components can be maintained.

As the diisocyanate compound, a known compound can be used. Examples thereof include an aliphatic diisocyanate, an alicyclic diisocyanate, and an aromatic diisocyanate. Specific examples thereof include aliphatic diisocyanates such as pentamethylene diisocyanate, hexamethylene diisocyanate, and trimethylhexamethylene diisocyanate; alicyclic diisocyanates such as isophorone diisocyanate, hydrogenated diphenyl diisocyanate, and norbornene diisocyanate; and aromatic diisocyanates such as xylylene diisocyanate, tolylene diisocyanate, and diphenylmethane diisocyanate. Among them, aliphatic and alicyclic diisocyanates are preferable from the viewpoint of preventing coloring of the resulting sealing material over time.

As the polyol compound, a known compound can be used. Examples thereof include a polyester polyol, a polyether polyol, a polycarbonate polyol, and a polyol composed of a hydrocarbon. The polyol compound is preferably a divalent diol compound or a trivalent triol compound from the viewpoint that the polarity of the polyfunctional urethane acrylate compound obtained after the reaction does not become too high and the conformance of the sealing material to the base material can be increased.

As the polyester polyol, a compound obtained by condensation reaction of a dicarboxylic acid compound and a polyol compound can be used. Specific examples of the dicarboxylic acid compound include succinic acid, adipic acid, pimelic acid, and sebacic acid. Among them, adipic acid and pimelic acid are preferable. Examples of the polyol compound include a diol compound and a triol compound. Specific examples of the diol compound include ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, 1,8-octanediol, diethylene glycol, and dipropylene glycol. Specific examples of the triol compound include glycerin, 1,2,4-butanetriol, and trimethylolpropane. Among them, 1,5-pentanediol, 3-methyl-1,5-pentanediol, 1,6-hexanediol, diethylene glycol, and glycerin are preferable.

As the polyether polyol, a known compound can be used. Specific examples thereof include diol compounds such as polyethylene glycol, polypropylene glycol, polybutylene glycol, and polytetramethylene glycol, and triol compounds such as polyoxypropylene triol and polyoxyethylene polyoxypropylene triol. Among them, polyethylene glycol, polypropylene glycol, and polyoxypropylene triol are preferable.

As the polycarbonate polyol, a compound obtained by transesterification of a carbonic acid diester and a polyol compound can be used. Specific examples of the carbonic acid diester include diphenyl carbonate, dimethyl carbonate, and diethylene carbonate. Among them, diphenyl carbonate is preferable. Examples of the polyol compound include a diol compound and a triol compound. Specific examples of the diol compound include ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, 1,8-octanediol, diethylene glycol, and dipropylene glycol. Specific examples of the triol compound include glycerin, 1,2,4-butanetriol, and trimethylolpropane. Among them, 1,5-pentanediol, 3-methyl-1,5-pentanediol, 1,6-hexanediol, diethylene glycol, and glycerin are preferable.

As the polyol composed of a hydrocarbon, a known compound can be used. Specific examples thereof include diol compounds such as ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, and 1,8-octanediol, and triol compounds such as glycerin, 1,2,4-butanetriol, and trimethylolpropane. Among them, 1,5-pentanediol, 3-methyl-1,5-pentanediol, 1,6-hexanediol, and glycerin are preferable.

As the (meth)acrylate compound having a hydroxyl group, a known compound can be used. Specifically, 2-hydroxyethyl (meth)acrylate, 2-hydroxypropyl (meth)acrylate, 4-hydroxybutyl (meth)acrylate, 4-hydroxycyclohexyl (meth)acrylate, 5-hydroxycyclooctyl (meth)acrylate, 2-hydroxy-3-phenyloxypropyl (meth)acrylate, propylene glycol monoacrylate, polyethylene glycol mono(meth) acrylate, polypropylene glycol mono(meth)acrylate and the like can be used. Among them, 2-hydroxyethyl acrylate and propylene glycol monoacrylate are preferable from the viewpoint that coloring of the sealing material over time can be prevented, the flexibility of the cured product of the curable resin composition can be increased, and the conformance of the sealing material to the base material can be increased.

The weight average molecular weight of the polyfunctional urethane (meth)acrylate compound (B) is preferably 1,000 to 15,000, and more preferably 3,000 to 10,000 from the viewpoint of simultaneously achieving performances of not contaminating the liquid crystal even in cases where the curable resin composition in an uncured state comes into contact with the liquid crystal, suppressing the alignment disorder of the liquid crystal even in cases where the sealing material is exposed to a harsh wet heat test, and exhibiting high conformance of the sealing material to the base material regardless of the temperature environment, and also from the viewpoint of easily handling the compound itself. The weight average molecular weight of the urethane (meth)acrylate is determined by gel permeation chromatography (GPC) using a calibration curve of standard polystyrene.

### <Polyfunctional (meth)allyl compound (C)>

The polyfunctional allyl compound (C) is a compound having 2 to 4 (meth)allyl groups. The polyfunctional allyl compound (C) can be used alone or in combination of two or more types thereof. By the polyfunctional allyl compound (C) being contained, the toughness of the cured product of the curable resin composition can be increased, and the conformance of the sealing material to the base material can be increased. In addition, the polyfunctional allyl compound (C) is excellent in formation of a cross-linking network with other components, and thus the sealing material is excellent in the moisture barrier property, and further, the polyfunctional allyl compound (C) hardly causes hydrolysis in a moisture resistance test as compared with the (meth)acrylic compound. Therefore, it is possible to maintain the high moisture barrier property of the sealing material in the moisture resistance test, and suppress the alignment disorder of the liquid crystal even in cases where the sealing material is exposed to a harsh wet heat test.

The polyfunctional allyl compound (C) is preferably a compound represented by the following Formula 2.

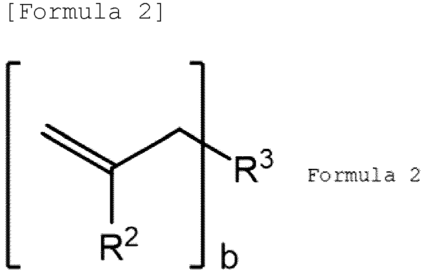

(In the formula, b is an integer of 2 to 4. R² is a hydrogen atom or a methyl group. R³ is a 2 to 4 valent organic group having 2 to 40 carbon atoms.)

R² in the formula is a hydrogen atom or a methyl group, and is preferably a hydrogen atom from the viewpoint of increasing the flexibility of the cured product of the curable resin composition and increasing the conformance of the sealing material to the base material. b is an integer of 2 to 4, and when b is in this range, the moisture barrier property of the sealing material can be enhanced and the alignment disorder can be suppressed even in cases where the sealing material is exposed to a harsh wet heat test, and the flexibility of the cured product of the curable resin composition is increased and the conformance of the sealing material to the base material can be enhanced. From the same viewpoint, R³ is also 2 to 4 valent. The carbon number of R³ is 2 to 40, preferably 2 to 30, and more preferably 2 to 25. When the carbon number of R²³ is within this range, the crosslinking density of the cured product of the curable resin composition is sufficient, the sealing material has a good moisture barrier property, and the alignment disorder can be suppressed even in cases where the sealing material is exposed to a harsh wet heat test.

The organic group is a group that contains C and can further contain at least one element selected from the group consisting of Si, N, P, O, and S. The organic group can be a polymer having a repeating unit. In the structure, a group such as a ketone group, an ester group, an ether group, a hydroxyl group, an amide group, a thioether group, or an isocyanurate group can be also contained.

Specific examples of the compound in which b in the formula is 2 include 1,4-cyclohexanedicarboxylic acid di(meth)allyl ester, isophthalic acid di(meth)allyl ester, phthalic acid di(meth)allyl ester, hexahydrophthalic acid di(meth)allyl ester, di (meth)allylmethylglycidyl isocyanurate, magnolol, di(meth) allyldiphenylsilane, trimethylolpropane (meth)allyl ether, 2,2'-bis(3-(meth)allyl-4-ydroxyphenyl)propane, 2,2-bis(3-(meth)allyl-4-allyloxyphenyl)propane, 2,2-bis(3-(meth)allyl-4-glycidyloxyphenyl)propane, 1,3-di(meth)allyl-5-glycidyl isocyanurate, and 1,3-di(meth)allyl cyanurate.

Specific examples of the compound in which b is 3 include triallyl isocyanurate, pentaerythritol tri(meth)allyl ether, glycerin tri(meth)allyl ether, and trimethylolpropane triallyl ether.

Specific examples of the compound in which b is 4 include 1,3,4,6 tetra(meth)allyl glycoluril, 1,3,4,6 tetra(meth)allyl-3a-methylglycoluril, pentaerythritol tetra(meth)allyl ether, and tetra(meth)allyloxyethane.

Among the (meth)allyl compounds, a (meth)allyl compound having an isocyanurate skeleton, a (meth)allyl compound having a pentaerythritol skeleton and the like are preferable from the viewpoint that coloring of the sealing material over time can be prevented, the moisture barrier property of the sealing material can be increased, the alignment disorder can be suppressed even in cases where the sealing material is exposed in a harsh wet heat test, the toughness of the cured product of the curable resin composition can be increased, and the conformance of the sealing material to the base material can be increased. Among them, specifically, 1,3-diallyl-5-glycidyl isocyanurate, triallyl isocyanurate, pentaerythritol triallyl ether, and pentaerythritol tetraallyl ether are preferable.

### <Spherical filler (D)>

The spherical filler (D) is a spherical filler that is formed of an inorganic substance or an organic substance, and has an average particle diameter of 15 um or less. The spherical filler (D) can be used alone or in combination of two or more types thereof. By the spherical filler (D) being contained, the shape stability of the uncured curable resin composition can be improved, and the shape can be maintained without wet-spreading or repelling on the base material for a long period of time.

The spherical filler (D) has an average particle diameter of 15 um or less, and preferably 10 um or less. When the average particle diameter is in this range, the flexibility of the curable resin composition and the adhesiveness of the curable resin composition to the base material are not impaired, and the conformance of the sealing material to the base material can be maintained. The average particle diameter can be measured with a commercially available particle diameter distribution measuring apparatus such as Microtrac MT-3000II manufactured by MicrotracBEL Corp.

Examples of the spherical filler (D) formed of an inorganic substance include silica, silicon carbide, calcium carbonate, magnesium carbonate, alumina, titania, calcium oxide, magnesium oxide, magnesium hydroxide, and aluminum hydroxide. Among them, silica is preferable from the viewpoint that the moisture barrier property of the sealing material is not impaired, and the shape stability can be improved while maintaining the performance of suppressing the alignment disorder even in cases where the sealing material is exposed to a harsh wet heat test.

Examples of the spherical filler (D) formed of an organic substance include acrylic particles, urethane particles, styrene particles, melamine particles, and acryl-styrene particles. Among them, acrylic particles and urethane particles are preferable from the viewpoint that the flexibility of the curable resin composition and the adhesiveness of the curable resin composition to the base material are not impaired, and the conformance of the sealing material to the base material can be maintained.

### <Photopolymerization initiator (E)>

When (A) above, (B) above, (C) above, and other polymerizable compounds are added, the photopolymerization initiator (E) is added to accelerate a curing reaction of the polymerizable compounds by light, and thereby light irradiation required for curing the curable resin composition can be reduced. The photopolymerization initiator (D) can be used alone or in combination of two or more types thereof. Examples of the photopolymerization initiator include a photoradical polymerization initiator, a photocationic polymerization initiator, and a photoanionic polymerization initiator. Among them, a photoradical polymerization initiator is preferable from the viewpoint of shortening the reaction time and improving the productivity.

Examples of the photoradical polymerization initiator include 2,2-dimethoxy-1,2-diphenylethan-1-one, 1-hydroxycyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]-phenyl}-2-methyl-propan-1-one, 2-methyl-1-[4-(methylthio)phenyl]-2-morpholinopropan-1-one, bis(2,4,6-trimethylbenzoyl)-phenylphosphine oxide, 2,4,6-trimethylbenzoyl-diphenylphosphine oxide, 1,2-octanedione-1-[4-(phenylthio)phenyl]-2-(O-benzoyloxime), and 1-[9-ethyl-6-(2-methylbenzoyl)-9H-carbazol-3yl]ethanone-1-(O-acetyloxime) .

Examples of the photocationic polymerization initiator include bis(4-tert-butylphenyl)iodonium hexafluorophosphate, bis(4-tert-butylphenyl)iodonium trifluoromethanesulfonate, cyclopropyl-diphenylsulfonium tetrafluoroborate, diphenyliodonium hexafluorophosphate, diphenyliodonium hexafluoroarsenate, 2-(3,4-dimethoxystyryl)-4,6-bis(trichloromethyl)-1,3,5-triazine, triphenylsulfonium tetrafluoroborate, triphenylsulfonium bromide, tri-p-tolylsulfonium hexafluorophosphate, and tri-p-tolylsulfonium trifluoromethanesulfonate.

Examples of the photoanionic polymerization initiator include acetophenone o-benzoyloxime, nifedipine, 2-(9-oxoxanthen-2-yl)propionic acid 1,5,7-triazabicyclo[4,4,0]dec-5-ene, 2-nitrophenylmethyl 4-methacryloyloxypiperidine-1-carboxylate, 1,2-diisopropyl-3-[bis(dimethylamino)methylene]guanidinium 2-(3-benzoylphenyl)propionate, and 1,2-dicyclohexyl-4,4,5,5,-tetramethylbiguanidinium n-butyltriphenylborate.

### <Polyfunctional (meth)acrylic compound (F)>

The curable resin composition of the present invention can contain a polyfunctional (meth)acrylic compound (F) as long as the object of the present invention is not hindered. The polyfunctional (meth)acrylic compound (F) functions as a compatibilizer between the polyfunctional urethane (meth)acrylate compound (B) and other components, and can improve the performance of preventing contamination of the liquid crystal even in cases where the uncured product of the curable resin composition comes into contact with the liquid crystal for a long period of time. The polyfunctional (meth)acrylic compound preferably has two or more (meth)acrylic groups from the viewpoint of not inhibiting the curability of the curable resin composition. In addition, the polyfunctional (meth)acrylic compound preferably has 6 or less (meth)acrylic groups from the viewpoint of reducing the flexibility of the cured product of the curable resin composition and not inhibiting the conformance to the base material. As such a polyfunctional (meth)acrylic compound, a known compound can be used. Among them, a compound represented by the following Formula 3 is preferable from the viewpoint of working better as a compatibilizer, not reducing the flexibility of the cured product of the curable resin composition, and not inhibiting the conformance to the base material.

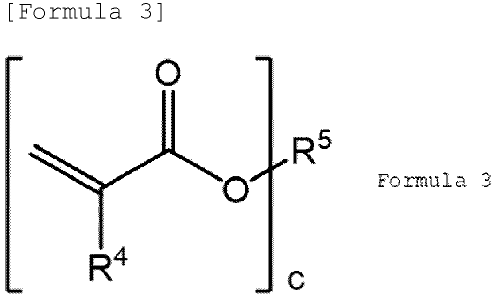

(In the formula, c is an integer of 2 to 4. R⁴ is a hydrogen atom or a methyl group. R⁵ is a group including a hydrocarbon group having 2 to 14 carbon atoms, a group including an ether oxygen (-O-) and a hydrocarbon group and having 2 to 14 carbon atoms, a group including a hydroxyl group and a hydrocarbon group and having 2 to 14 carbon atoms, a group including an isocyanurate skeleton, and at least one group selected from ether oxygen, a hydroxyl group, and a hydrocarbon, or a group including a bisphenol skeleton, and at least one group selected from ether oxygen, a hydroxyl group, and a hydrocarbon.

Specific examples of the polyfunctional (meth)acrylic compound in which c is 2 include 1,3-butanediol di(meth)acrylate, 1,4-butanediol di(meth)acrylate, 1,6-hexanediol di(meth)acrylate, 1,9-nonanediol di(meth)acrylate, ethylene glycol di(meth)acrylate, diethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, ethylene oxide-added bisphenol A di(meth)acrylate, propylene oxide-added bisphenol A di(meth)acrylate, ethylene oxide-added bisphenol F di(meth)acrylate, dimethyloldicyclopentadienyl di(meth)acrylate, and neopentyl glycol di(meth)acrylate, ethylene oxide-modified isocyanuric acid di(meth)acrylate, 2-hydroxy-3-(meth)acryloyloxypropyl (meth)acrylate, and polyether diol di(meth)acrylate.

Specific examples of the polyfunctional (meth)acrylic compound in which c is 3 or 4 include trimethylolpropane tri(meth)acrylate, caprolactone-modified trimethylolpropane tri(meth)acrylate, ethylene oxide-added trimethylolpropane tri(meth)acrylate, propylene oxide-added trimethylolpropane tri(meth)acrylate, ethylene oxide-added isocyanuric acid tri(meth)acrylate, ethoxylated isocyanuric acid triacrylate, pentaerythritol tri(meth)acrylate, glycerin tri(meth)acrylate, propylene oxide-added glycerin tri(meth)acrylate ditrimethylolpropane tetra(meth)acrylate, and pentaerythritol tetra(meth)acrylate.

The content of the polyfunctional (meth)acrylic compound (F) in the curable resin composition of the present invention is 0 to 25 parts by mass, and preferably 1 to 15 parts by mass relative to a total of 100 parts by mass of (A), (B), and (C).

### <Surfactant (G)>

The curable resin composition of the present invention can contain a surfactant (G) as long as the object of the present invention is not hindered. Because the surfactant (G) has high hydrophobicity, when the surfactant (G) is contained in the curable resin composition, the moisture barrier property of the sealing material is improved, and even in cases where the sealing material is exposed to a harsh wet heat test, the alignment disorder of the liquid crystal can be further suppressed. Though as the surfactant (G), a known silicon surfactant, fluorine surfactant, acrylic surfactant and the like can be used without particular limitation, a fluorine surfactant is preferable from the viewpoint of increasing the moisture barrier property. Specific examples of commercially available products of the fluorine surfactant include "MEGAFACE F-410", "MEGAFACE F-430", "MEGAFACE F-444", "MEGAFACE F-472SF", "MEGAFACE F-477", "MEGAFACE F-552", "MEGAFACE F-553", "MEGAFACE F-554", "MEGAFACE F-555", "MEGAFACE F-556", "MEGAFACE F-558", "MEGAFACE F-559", "MEGAFACE F-561", "MEGAFACE R-94", "MEGAFACE RS-72-K", and "MEGAFACE RS-75" manufactured by DIC Corporation. These surfactants can be used alone or in combination of two or more types thereof.

The content of the surfactant (G) in the curable resin composition of the present invention is 0 to 1 parts by mass, and preferably 0.01 to 0.2 parts by mass relative to a total of 100 parts by mass of (A), (B), and (C).

### <Silane coupling agent (H)>

The curable resin composition of the present invention can contain a silane coupling agent (H) as long as the object of the present invention is not hindered. The silane coupling agent (H) improves the interaction between other components and the base material, and when the silane coupling agent (H) is contained in the curable resin composition, the toughness and the adhesiveness to the base material of the cured product of the curable resin composition are improved, and the conformance to the base material can be further increased regardless of the change in the temperature environment. Though a known silane coupling agent can be used without particular limitation, a silane coupling agent having a reactive functional group such as a (meth)acrylic group, a vinyl group, a thiol group, an epoxy group, and an isocyanate group is preferable from the viewpoint of preventing the phenomenon that the liquid crystal is contaminated by bleedout of the silane coupling agent and the alignment disorder of the liquid crystal occurs when the sealing material is used for a long period of time. Specific examples thereof include 3-(meth)acryloxypropylmethyldimethoxysilane, 3-(meth)acryloxypropylmethyltrimethoxysilane, 3-(meth)acryloxypropylmethyldiethoxysilane, 3-(meth)acryloxypropylmethyltriethoxysilane, vinyltrimethoxysilane, vinyltriethoxysilane, 3-mercaptopropylmethyldimethoxysilane, 3-mercaptopropylmethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and 3-isocyanatopropyltriethoxysilane. These silane coupling agents can be used alone or in combination of two or more types thereof.

The content of the silane coupling agent (H) in the curable resin composition of the present invention is 0 to 10 parts by mass, and preferably 1 to 5 parts by mass relative to a total of 100 parts by mass of (A), (B), and (C) .

### <Other components>

The curable resin composition of the present invention can contain additives such as an epoxy compound, a curing accelerator, an ultraviolet absorber, a light stabilizer, an antioxidant, a polymerization inhibitor, a leveling agent, an adhesion imparting agent, a plasticizer, an antifoaming agent, a light shielding material, a conductive material, and a spacer in addition to the polyfunctional (meth)acrylic compound (F), the surfactant (G), and the silane coupling agent (H) as long as the object of the present invention is not hindered.

### <Composition ratio (blending ratio)>

When the curable resin composition of the present invention contains the above (B) having a property of being hardly mixed with the liquid crystal, the liquid crystal contamination in an uncured state can be reduced. In the curable resin composition of the present invention, the thiol-ene reaction proceeds between thiol groups of the polyfunctional thiol compound (A) and polymerizable unsaturated bonds of the polyfunctional urethane (meth)acrylate compound (B) and the polyfunctional (meth)allyl compound (C), and a cured product is obtained. The formed thioether bond can flexibly change the bond angle, enhance the flexibility of the cured product of the curable resin composition, and thus enhance the conformance of the sealing material to the base material. In addition, the urethane group contained in the polyfunctional urethane (meth)acrylate compound (B) can exhibit a strong interaction such as hydrogen bonding between urethane groups and between urethane groups and other polar groups also in a low temperature zone to a high temperature zone, and thus the cured product is toughened regardless of the temperature environment, and the conformance of the sealing material to the base material can be increased. A cured product formed of the thioether bond can be cured at a high density so that atoms fill gaps between bonds due to its high bond angle flexibility. Therefore, the cured product has a high moisture barrier property, and thus can suppress the alignment disorder of the liquid crystal without being affected by moisture even under exposure to a harsh wet heat test. Further, by the spherical filler (D) being contained, the shape stability of the uncured curable resin composition can be improved, and the shape can be maintained without wet-spreading or repelling on the base material for a long period of time. As a result, in the curable resin composition of the present invention, all of (A), (B), (C), and (D) are required to be contained in order to lower the liquid crystal non-contaminating property even in cases where the curable resin composition in an uncured state comes into contact with the liquid crystal and maintain the shape without wet-spreading or repelling on the base material for a long period of time, and also to suppress the alignment disorder of the liquid crystal even in a state where the sealing material formed of the cured product of the curable resin composition is in contact with the liquid crystal under harsh wet heat environment, and in addition, to enhance the conformance to the base material regardless of the temperature environment. By further using (E) above for the curable resin composition containing (A), (B), (C), and (D), the curable resin composition can be cured only by light irradiation to exhibit the above effects. In general, when the curable resin composition contains (D), the light transmittance in the curable resin composition decreases, and thus it is difficult to cure a deep portion only by light irradiation. However, in the curable resin composition of the present invention, the polyfunctional thiol compound (A) also contributes as a chain transfer agent, so that the curable resin composition can be sufficiently cured to the deep portion only by light irradiation. In addition, when the blending is performed so that the blending mass ratio (B)/(C) of (B) to (C) is 0.1 to 1.0, the ratio of a functional group concentration of thiol groups of (A) to the sum of a functional group concentration of a polymerizable unsaturated bond of (B) and a functional group concentration of a polymerizable unsaturated bond of (C) (thiol group/polymerizable unsaturated bond) is 0.5 to 3.0, and the amount of (D) is 1 to 50 parts by mass relative to a total of 100 parts by mass of (A), (B), and (C), the curable resin composition does not contaminate the liquid crystal even in cases where the curable resin composition in an uncured state comes into contact with the liquid crystal, and can maintain its shape without wet-spreading or repelling on a base material for a long period of time, and further, does not cause the alignment disorder of the liquid crystal even in a state where the cured product is in contact with the liquid crystal under harsh wet heat environment, and exhibits excellent conformance to the base material regardless of the change in the temperature environment. The functional group concentration of the thiol groups is a number represented by parts by mass of (A) in a total of 100 parts by mass of (A), (B), and (C) × the number of functional groups of thiol groups of (A)/the molecular weight of (A), and the sum of a functional group concentration of a polymerizable unsaturated bond of (B) and a functional group concentration of a polymerizable unsaturated bond of (C) is a number represented by [parts by mass of (B) in a total of 100 parts by mass of (A), (B) and (C) × number of (meth)acrylic groups of (B)/molecular weight of (B)] + [parts by mass of (C) in a total of 100 parts by mass of (A), (B) and (C) × number of allyl groups of (C)/molecular weight of (C)].

The curable resin composition of the present invention preferably contains 10 parts by mass or more of (B) in a total of 100 parts by mass of (A), (B), and (C), in order to enhance a liquid crystal non-contaminating property, not to contaminate the liquid crystal even in cases where the curable resin composition in an uncured state comes into contact with the liquid crystal, to enhance the flexibility and toughness of the cured product of the curable resin composition, and to further enhance the conformance of the sealing material to the base material regardless of the change in the temperature environment. In addition, the curable resin composition preferably contains 20 parts by mass or less of (B) in a total of 100 parts by mass of (A), (B), and (C), in order to enhance the moisture barrier property of the sealing material, and further suppress the alignment disorder under a harsh wet heat test. That is, the curable resin composition preferably contains 10 parts by mass or more and 20 parts by mass or less of (B) in a total of 100 parts by mass of (A), (B), and (C), in order to simultaneously achieve performances of not contaminating the liquid crystal even in cases where the curable resin composition in an uncured state comes into contact with the liquid crystal, suppressing the alignment disorder of the liquid crystal even in cases where the sealing material is exposed to a harsh wet heat test, and exhibiting high conformance of the sealing material to the base material regardless of the temperature environment at a higher level.

In addition, in the curable resin composition of the present invention, in order to enhance the moisture barrier property of the sealing material and further suppress the alignment disorder under a harsh wet heat test, the blending mass ratio (B)/(C) of (B) to (C) is preferably 0.1 to 0.6, in order to enhance the flexibility and toughness of the cured product of the curable resin composition and to further enhance the conformance of the sealing material to the base material, the blending mass ratio (B)/(C) of (B) to (C) is preferably 0.2 to 1.0, and in order to enhance the flexibility and toughness of the cured product of the curable resin composition from a low temperature to a high temperature and to further enhance the conformance of the sealing material to the base material regardless of the change in the temperature environment, the blending mass ratio (B)/(C) of (B) to (C) is preferably 0.3 to 1.0, that is, in order to simultaneously achieve performances of suppressing the alignment disorder of the liquid crystal even in cases where the sealing material is exposed to a harsh wet heat test and exhibiting high conformance of the sealing material to the base material regardless of the temperature environment at a higher level, the blending mass ratio (B)/(C) of (B) to (C) is preferably 0.3 to 0.6.

Further, in the curable resin composition of the present invention, in order to enhance the moisture barrier property of the sealing material and further suppress the alignment disorder under a harsh wet heat test, the ratio of a functional group concentration of thiol groups of (A) to the sum of a functional group concentration of a polymerizable unsaturated bond of (B) and a functional group concentration of a polymerizable unsaturated bond of (C) (thiol group/polymerizable unsaturated bond) is preferably 0.7 to 2.3, in order to enhance the flexibility and toughness of the cured product of the curable resin composition and to further enhance the conformance of the sealing material to the base material, the ratio of a functional group concentration of thiol groups of (A) to the sum of a functional group concentration of a polymerizable unsaturated bond of (B) and a functional group concentration of a polymerizable unsaturated bond of (C) (thiol group/polymerizable unsaturated bond) is preferably 0.7 to 2.5, and in order to enhance the flexibility and toughness of the cured product of the curable resin composition from a low temperature to a high temperature and to further enhance the conformance of the sealing material to the base material regardless of the change in the temperature environment, the ratio of a functional group concentration of thiol groups of (A) to the sum of a functional group concentration of a polymerizable unsaturated bond of (B) and a functional group concentration of a polymerizable unsaturated bond of (C) (thiol group/polymerizable unsaturated bond) is preferably 0.8 to 2.4, that is, in order to simultaneously achieve performances of suppressing the alignment disorder of the liquid crystal even in cases where the sealing material is exposed to a harsh wet heat test and exhibiting high conformance of the sealing material to the base material regardless of the temperature environment at a higher level, the ratio of a functional group concentration of thiol groups of (A) to the sum of a functional group concentration of a polymerizable unsaturated bond of (B) and a functional group concentration of a polymerizable unsaturated bond of (C) (thiol group/polymerizable unsaturated bond) is preferably 0.8 to 2.3.

In addition, in the curable resin composition of the present invention, in order to improve the shape stability of the uncured curable resin composition and to maintain the shape without wet-spreading or repelling on the base material, the amount of (D) is preferably 2 to 50 parts by mass relative to a total of 100 parts by mass of (A), (B), and (C), and in order to further enhance the conformance of the sealing material to the base material regardless of the change in the temperature environment without impairing the flexibility and toughness of the cured product of the curable resin composition, the amount of (D) is preferably 1 to 40 parts by mass relative to a total of 100 parts by mass of (A), (B), and (C), that is, in order to allow the curable resin composition in an uncured state to maintain its shape without wet-spreading or repelling on the base material for a long period of time, and to allow the sealing material to have high conformance to the base material regardless of the temperature environment, the amount of (D) is preferably 2 to 40 parts by mass relative to a total of 100 parts by mass of (A), (B), and (C).

In the curable resin composition of the present invention, the ratio of (E) to a total of 100 parts by mass of (A), (B), and (C) is preferably 0.01 to 10.0 parts by mass, and more preferably 0.1 to 10.0 parts by mass. When the content of (E) is within the above range, a sealing material that does not cause the alignment disorder of the liquid crystal even in a state where the sealing material is in contact with the liquid crystal under harsh wet heat environment, and, in addition, is excellent in conformance to the base material regardless of the change in the temperature environment can be obtained.

### <Film liquid crystal panel>

Examples of the film liquid crystal panel of the present invention include a light control member that only controls transparency and opacity by liquid crystal alignment and a display element that displays images such as a display. The film liquid crystal panel of the present invention is, for example, one in which a pair of base plates is arranged so that the base plates face each other, the periphery is sealed with a sealing material for a film liquid crystal panel, and a liquid crystal material exists therebetween. The base plates are those in which a silver or copper electrode or a transparent electrode such as ITO or PEDOT is applied on a plastic transparent film base material such as polyethylene terephthalate, polycarbonate, a cycloolefin (co)polymer, PMMA, or polyimide. An alignment film or the like may be further formed on the transparent electrode.

The film liquid crystal panel of the present invention is a liquid crystal panel formed of a base plate in which the plastic transparent film base material is used, and the sealing material for a film liquid crystal panel is a sealing material used for a film liquid crystal panel.

### <Formation of film liquid crystal panel>

The film liquid crystal panel of the present invention is formed by applying the curable resin composition of the present invention to one of the pair of base plates, then dropping the liquid crystal inside the curable resin composition, and superposing the other base plate thereon with a liquid crystal interposed therebetween, and irradiating light to cure the curable resin composition. The film liquid crystal panel of the present invention is also formed by applying a polymer dispersed liquid crystal containing a liquid crystal and a curable resin composition to one of the pair of base plates, superposing the other base plate thereon, irradiating light to cure the polymer dispersed liquid crystal, then applying the curable resin composition of the present invention to the outer periphery, and irradiating light to cure the curable resin composition.

The method for applying the curable resin composition is not particularly limited, and for example, a method using coating equipment such as dispenser coating, an inkjet method, or a screen printing method, or a method of manually applying the curable resin composition with a syringe or a brush is applied.

The light source for irradiating the curable resin composition with light is not particularly limited, and for example, a mercury lamp such as a high-pressure mercury-vapor lamp or an ultra-high pressure mercury lamp, a black light lamp, an LED lamp, a halogen lamp, an electrodeless lamp, a xenon lamp, a mercury fluorescent lamp, an LED fluorescent lamp, sunlight, an electron beam irradiation instrument or the like is applied.

The contamination of the film liquid crystal panel can also be evaluated by measuring the voltage holding ratio, in addition to the method of forming the film liquid crystal panel and actually applying a voltage to confirm the alignment state as described above. The voltage holding ratio is an evaluation method in which a voltage is applied to a liquid crystal cell to check how much charged electric charge is held after a certain period of time. When the liquid crystal is contaminated, the electric charge is not held, and the voltage holding ratio decreases. The good voltage holding ratio without contamination is preferably 90% or more, and more preferably 95% or more.

### EXAMPLES

The present invention will be described more specifically with reference to Examples and Comparative Examples.

### <Evaluation method>

The performance of each curable resin composition in Examples and Comparative Examples was evaluated by the method described below.

### <Liquid crystal non-contaminating property>

To a sample bottle, 0.025 g of the curable resin composition was added, 1 g of a liquid crystal (MLC-7021-000 manufactured by Merck Corporation) was further added, and the sample bottle was allowed to stand at 25°C for 1 hour. Thereafter, ultraviolet irradiation (1,000 mJ/cm²) was performed using a high-pressure mercury-vapor lamp to cure the curable resin composition, and the mixture was heated at 100°C for 2 hours. After 2 hours, the cured product and the liquid crystal were separated with a centrifuge, and the liquid crystal was injected into an ITO-equipped glass base plate liquid crystal cell (KSSZ-05/B107MINX05 manufactured by EHC. Co., Ltd.). Using a liquid crystal physical property evaluation system (6245 manufactured by TOYO Corporation), an initial voltage of AC 5 V was applied to the liquid crystal cell at 25°C for 64 µs, and a value (voltage holding ratio) obtained by multiplying a voltage ratio before and after a frame time of 16.7 ms by 100 was calculated. The higher the voltage holding ratio, the less likely the liquid crystal is to be contaminated, and the voltage holding ratios are described as the liquid crystal non-contaminating property in tables.

### <Shape stability>

A masking tape was attached onto a 40 mm × 45 mm glass base plate (RT-DM88-PIN manufactured by EHC. Co., Ltd.) on which a transparent electrode and an alignment film are placed in this order. Then, each curable resin composition produced in Examples and Comparative Examples was applied with an applicator so as to have a film thickness of 100 um, and the masking tape was peeled off to form the curable resin composition into a square shape of 25 mm × 25 mm. Thereafter, the curable resin composition was allowed to stand at 25°C for 2 hours under light shielding, and the length of the side of the square curable resin composition was measured. The smaller the change in the side length of the square shape before and after standing, the less the wet-spreading or repelling and the higher the shape stability, and the amounts of change in the side length are described in tables.
⊙: The change in the side length is within ± 1 mm.
O: The change in the side length is more than ± 1 mm but within ± 2 mm.
×: The side length is changed by more than ± 2 mm.

### <Curability>

Each curable resin composition produced in Examples and Comparative Examples was applied onto a glass base plate with an applicator so that the film thickness was 100 um, and ultraviolet irradiation (200 mJ/cm²) was performed using a high-pressure mercury-vapor lamp. Thereafter, the surface was rubbed back and forth five times with a nonwoven fabric wiper (KimWipes manufactured by Nippon Paper Crecia Co., Ltd.), and the degree of scratching was visually confirmed. No scratch or a smaller number of scratches indicates higher curability, and the numbers of scratches are described in tables.
⊙: No scratch is observed (the number of scratches is 0).
○: The number of scratches is 5 or less.
×: The number of scratches is more than 5 or the composition remains liquid.

### <Alignment disorder under harsh wet heat environment>

Using a dispenser (SHOTMASTER manufactured by Musashi Engineering, Inc.), each curable resin composition produced in Examples and Comparative Examples was applied in a rectangular frame shape of 35 mm × 40 mm (line width: 1 mm) onto a 40 mm × 45 mm glass base plate (RT-DM88-PIN manufactured by EHC. Co., Ltd.) on which a transparent electrode and an alignment film were placed in this order, and a liquid crystal (MLC-11900-000 manufactured by Merck Corporation) was dropped inside the curable resin composition drawn on the frame. Next, the glass base plate and the opposing glass base plate were bonded together under reduced pressure, and this was left to stand at 25°C for 1 hour. Ultraviolet irradiation (1,000 mJ/cm²) was performed using a high-pressure mercury-vapor lamp to obtain a liquid crystal panel. The liquid crystal panel produced in the same manner as the above was exposed to a condition of 60°C and 90% RH for 1,000 hours, and then driven at a voltage of AC 5 V in a halftone display state, and the alignment disorder of the liquid crystal in the vicinity of the sealing material including the cured product of the curable resin composition was observed with a polarizing microscope. The shorter the distance at which the alignment disorder has spread from the end of the sealing material, the less likely the alignment disorder is to occur. The distances at which the alignment disorder has spread are described in tables.
⊙: No alignment disorder has spread beyond 0.3 mm from the end of the sealing material.
O: The alignment disorder has spread beyond 0.3 mm from the end of the sealing material, but the alignment disorder has not spread beyond 0.6 mm.
×: The alignment disorder has spread beyond 0.6 mm from the end of the sealing material.

### <Conformance to base material>

Each curable resin composition produced in Examples and Comparative Examples was applied onto a polyethylene terephthalate (PET) film having a thickness of 100 um with an applicator so that the film thickness was 100 µm, and ultraviolet irradiation (1,000 mJ/cm²) was performed using a high-pressure mercury-vapor lamp to cure the curable resin composition. The obtained PET film with a cured film was cut into a rectangular shape having a length of 100 mm and a width of 10 mm to be used as a sample. The obtained sample was subjected to a bending test using an MIT tester (BE-202 manufactured by TESTER SANGYO CO,. LTD.) (conditions: load: 1 N, bending speed: 175 cpm, bending radius: 2.5 mm, bending speed: 135°). The test sample was visually observed every 5,000 times of bending, and the presence or absence of cracks and peeling was checked. The larger the number of times of bending until occurrence of cracks and peeling, the better the conformance to the base material. The numbers of times of bending at which cracks and peeling occurred are described in tables.
O: No crack or peeling occurs even after 20,000 times of bending (5,000 times × 4) .
O: Cracks and peeling occur after 20,000 times (5,000 times × 4) or after 15,000 times (5,000 times × 3) .
×: Cracks and peeling occur within 10,000 times (5,000 times × 2).

<Conformance to base material after temperature environment change acceleration test>

Each curable resin composition produced in Examples and Comparative Examples was applied onto a polyethylene terephthalate (PET) film having a thickness of 100 um with an applicator so that the film thickness was 100 um, and ultraviolet irradiation (1,000 mJ/cm²) was performed using a high-pressure mercury-vapor lamp to cure the curable resin composition. The obtained PET film with a cured film was cut into a rectangular shape having a length of 100 mm and a width of 10 mm to be used as a sample. The obtained sample was exposed to heating and cooling shock of (-30°C, 30 minutes ⇔ 80°C, 30 minutes) × 200 times as a temperature environment change acceleration test, and then was subjected to a bending test using an MIT tester (BE-202 manufactured by TESTER SANGYO CO,. LTD.) (conditions: load: 1 N, bending speed: 175 cpm, bending radius: 2.0 mm, bending speed: 135°). The test sample was visually observed every 5,000 times of bending, and the presence or absence of cracks and peeling was checked. The larger the number of times of bending until occurrence of cracks and peeling, the better the conformance to the base material. The numbers of times of bending at which cracks and peeling occurred are described in tables.
O: No crack or peeling occurs even after 20,000 times of bending (5,000 times × 4).
O: Cracks and peeling occur after 20,000 times (5,000 times × 4) or after 15,000 times (5,000 times × 3).
×: Cracks and peeling occur within 10,000 times (5,000 times × 2).

### <Polyfunctional thiol compound (A)>

A-1: Dipentaerythritol hexakis(3-mercaptopropionate) [number of thiol groups: 6]
A-2: Pentaerythritol tetrakis(3-mercaptopropionate) [number of thiol groups: 4]
A-3: Tris-[(3-mercaptopropionyloxy)-ethyl]-isocyanurate [number of thiol groups: 3]

### <Synthesis of polyfunctional urethane (meth)acrylate (B)>

### [Synthesis of polyol compound (b-1)]

Into a reaction vessel equipped with a stirrer, a fractionating column, a nitrogen inlet tube, and a thermometer, 151.5 parts by mass of pimelic acid and 187.3 parts by mass of diethylene glycol were charged, and the mixture was heated to 140°C and stirred under a nitrogen atmosphere. Thereto was added 0.01 parts by mass of tetrabutyl titanate, and the mixture was heated to 220°C to perform a dehydration reaction. Then, the resulting product was subsequently held at 220°C to perform a dehydration reaction. After 18 hours from the start of the dehydration reaction, the content was cooled to obtain a diol compound (b-1) (weight average molecular weight: 1,000).

### [Synthesis of polyol compound (b-2)]

Into a reaction vessel equipped with a stirrer, a fractionating column, a nitrogen inlet tube, and a thermometer, 150.2 parts by mass of adipic acid and 158.3 parts by mass of 3-methyl-1,5-pentanediol were charged, and the mixture was heated to 140°C and stirred under a nitrogen atmosphere. Thereto was added 0.01 parts by mass of tetrabutyl titanate, and the mixture was heated to 220°C to perform a dehydration reaction. Then, the resulting product was subsequently held at 220°C to perform a dehydration reaction. After 18 hours from the start of the dehydration reaction, the content was cooled to obtain a diol compound (b-2) (weight average molecular weight: 1,500).

### [Synthesis of polyol compound (b-3)]

Into a reaction vessel equipped with a stirrer, a fractionating column, an air condenser, a thermometer, a receiver, and a vacuum apparatus, 160.3 parts by mass of diphenyl carbonate, 234.1 parts by mass of 1,6-hexanediol, and 0.1 parts by mass of tetrabutyl titanate were charged, and the mixture was heated to 100°C under reduced pressure of 10 Torr and stirred for 5 hours. The phenol generated as by-product was removed by distillation, and the content was cooled to obtain a diol compound (b-3) (weight average molecular weight: 600).

### [Synthesis of urethane (meth)acrylate (B-1)]

Into a reaction vessel equipped with a stirrer, a reflux condenser, a nitrogen inlet tube, and a thermometer, 101.1 parts by mass of the polyol compound (b-1) was charged, and stirring was started. Then, 0.1 parts by mass of dibutyltin laurate and 32.1 parts by mass of isophorone diisocyanate as a diisocyanate were added, the internal temperature was raised to 80°C while attention was paid to heat generation, and then the mixture was stirred for 3 hours while maintaining the temperature. Further, 0.1 parts by mass of methoquinone as a polymerization inhibitor and 24.0 parts by mass of 2-hydroxyethyl acrylate as a (meth)acrylate having a hydroxyl group were added, and the mixture was stirred at 85°C for 2 hours to obtain a urethane (meth)acrylate (B-1) (weight average molecular weight: 3,000).

### [Synthesis of (B-2) to (B-5)]

Polyfunctional urethane (meth)acrylates (B-2) to (B-5) were obtained in the same manner as the above method except that the polyol compound, the diisocyanate compound, and the (meth)acrylate compound having a hydroxyl group in Table 1 were used.

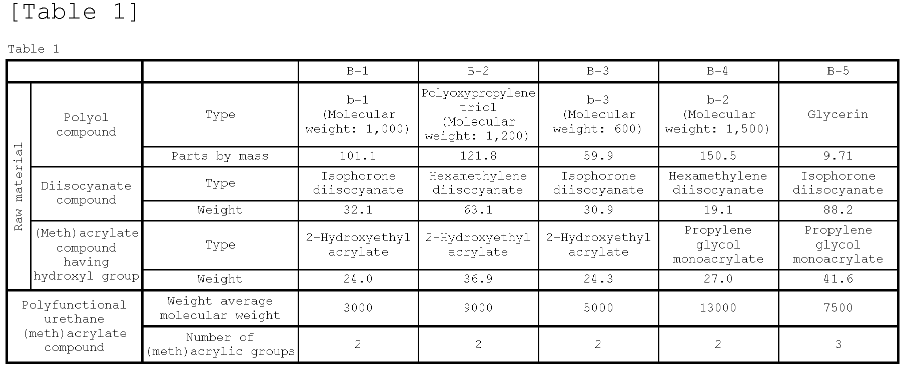

### <Polyfunctional allyl compound (C)>

C-1: 1,3-Diallyl-5-glycidyl isocyanurate [number of allyl groups: 2]
C-2: Triallyl isocyanurate [number of allyl groups: 3]
C-3: Pentaerythritol tetraallyl ether [number of allyl groups: 4]
C-4: Ethylene glycol monoallyl ether [number of allyl groups: 1]

### <Spherical filler (D)>

D-1: J-4P [average particle diameter: 2.2 pm] acrylic particles manufactured by Negami Chemical Industrial Co., Ltd.
D-2: AEROSIL RX-200 [average particle diameter: 12 nm] silica particles manufactured by Nippon Aerosil Co., Ltd.
D-3: C-600T [average particle diameter: 10 pm] urethane particles manufactured by Negami Chemical Industrial Co., Ltd.
D-4: C-400T [average particle diameter: 15 pm] urethane particles manufactured by Negami Chemical Industrial Co., Ltd.
D-5: SE-050T [average particle diameter: 46 µm] acrylic particles manufactured by Negami Chemical Industrial Co., Ltd.

### <Photopolymerization initiator (E)>

| | |
|---|---|
| E-1: | Bis(2,4,6-trimethylbenzoyl)-phenylphosphine oxide |
| E-2: | 1-Hydroxycyclohexyl phenyl ketone |
| E-3: | 2,4,6-Trimethylbenzoyl-diphenyl-phosphine oxide |

### <Component (F): polyfunctional (meth)acrylate>

| | |
|---|---|
| F-1: | Pentaerythritol tetraacrylate |
| F-2: | Trimethylolpropane trimethacrylate |

### <Component (G): surfactant>

| | |
|---|---|
| G-1: | MEGAFACE F-477 manufactured by DIC Corporation |
| G-2: | MEGAFACE F-554 manufactured by DIC Corporation |

### <Component (H): silane coupling agent>

| | |
|---|---|
| H-1: | 3-Methacryloxypropyltrimethoxysilane |
| H-2: | 3-Mercaptopropyltrimethoxysilane |

### [Example 1]

The above components were added to a planetary mixer in the amounts shown in Tables 2 and 3 below, and mixed and stirred for 2 hours to obtain curable resin compositions. Each evaluation was performed using the curable resin compositions. The results are shown in Table 2-1, Table 2-2, Table 2-3, Table 3-1, and Table 3-2.

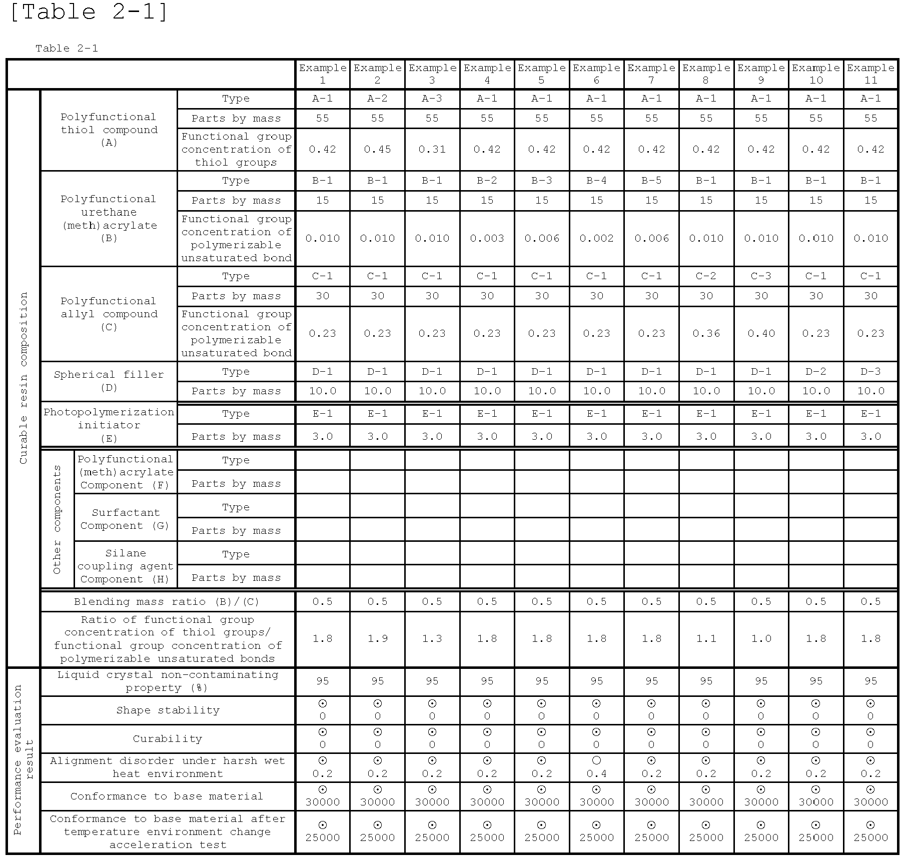

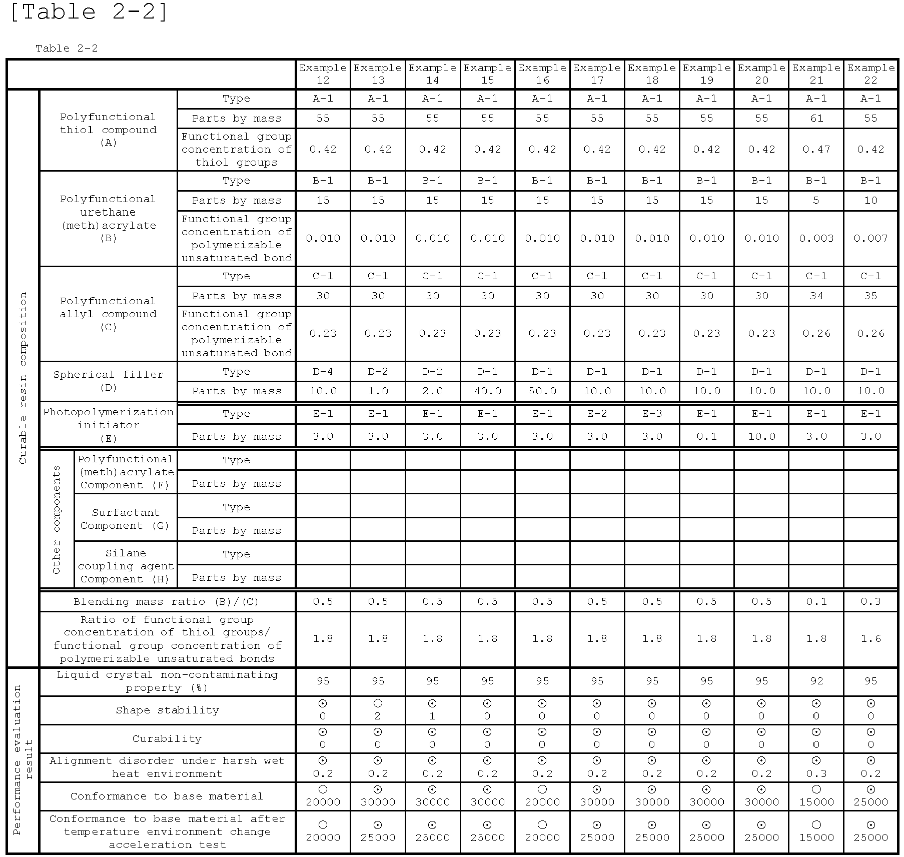

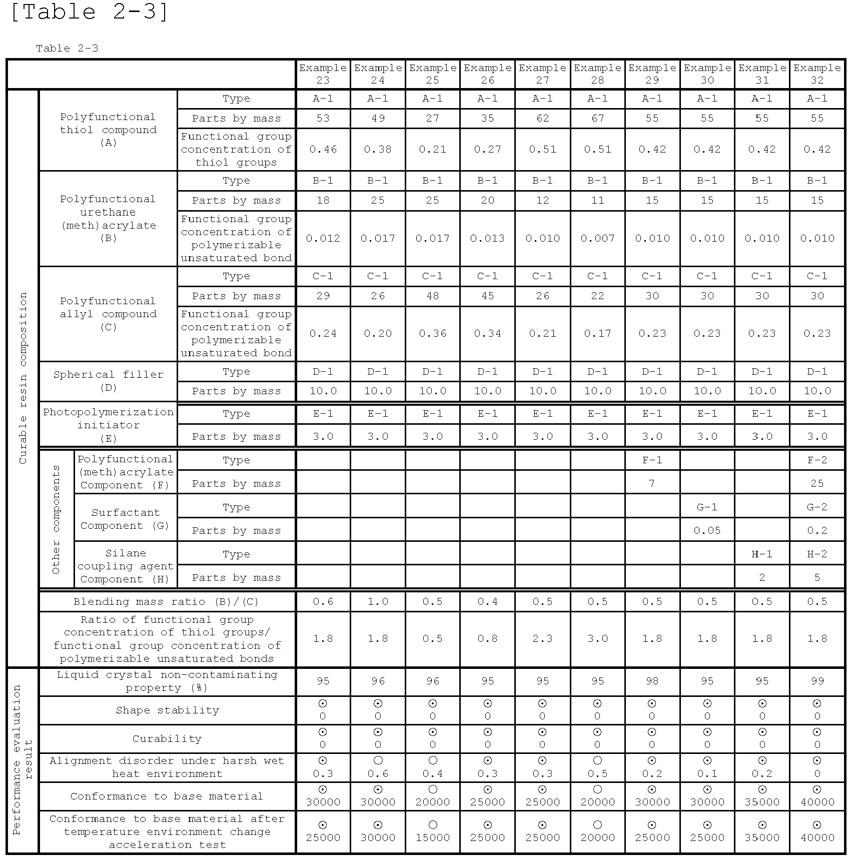

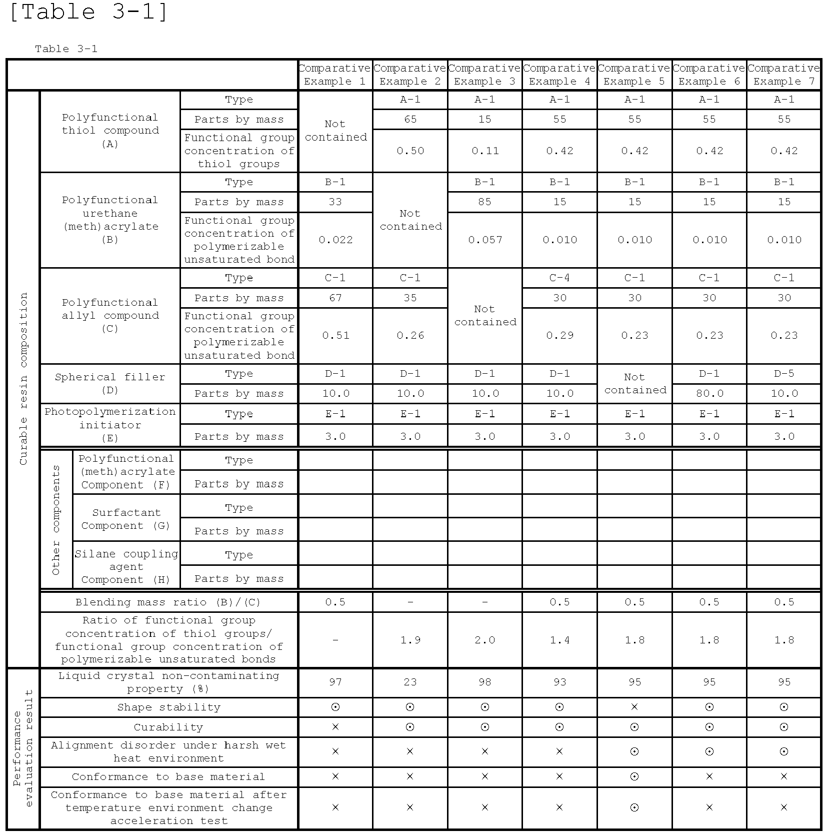

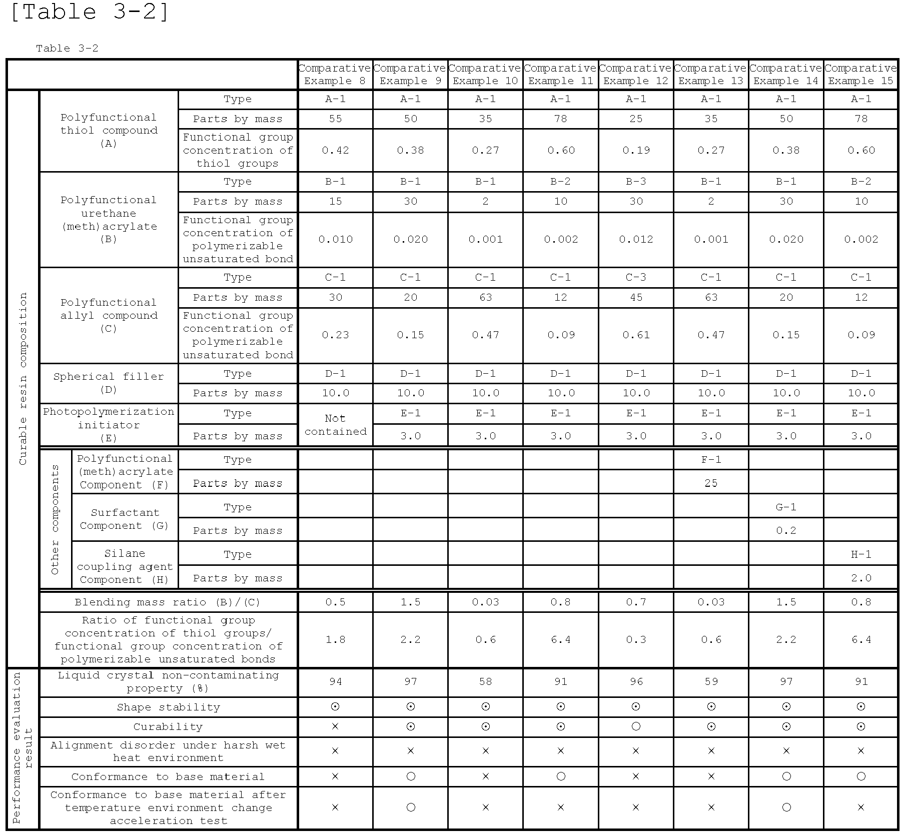

As a result of the above test, when the curable resin composition of each Example contained the components (A) to (E) in appropriate amounts specified in the present invention, the curable resin composition exhibited an excellent liquid crystal non-contaminating property, was capable of maintaining its shape without wet-spreading or repelling on the base material for a long period of time, was capable of being cured even with light having a low integrated light amount, caused no alignment disorder of the liquid crystal after the wet heat test, and had high conformance to the base material regardless of the temperature environment.

On the other hand, in Comparative Example 1, the curable resin composition did not contain the polyfunctional thiol compound (A), and thus had low photocurability, and the sealing material for a film liquid crystal panel obtained by curing the curable resin composition caused the alignment disorder of the liquid crystal in the harsh wet heat test, and had low conformance to the base material. In Comparative Example 2, the curable resin composition did not contain the polyfunctional urethane (meth)acrylate compound (B), and thus exhibited a poor liquid crystal non-contaminating property, and the sealing material for a film liquid crystal panel obtained by curing the curable resin composition caused the alignment disorder of the liquid crystal in the harsh wet heat test, and had low conformance to the base material. In Comparative Example 3, the curable resin composition did not contain the polyfunctional allyl compound (C), and thus the sealing material for a film liquid crystal panel obtained by curing the curable resin composition caused the alignment disorder of the liquid crystal in the harsh wet heat test, and had low conformance to the base material. In Comparative Example 4, the number of functional groups of the polyfunctional allyl compound (C) was small, and thus the sealing material for a film liquid crystal panel obtained by curing the curable resin composition caused the alignment disorder of the liquid crystal in the harsh wet heat test, and had low conformance to the base material. In Comparative Example 5, the curable resin composition did not contain the spherical filler (D), and thus the shape of the curable resin composition could not be maintained without wet-spreading or repelling for a long period of time on the base material. In Comparative Example 6, the blending amount of the spherical filler (D) was large, and thus the sealing material for a film liquid crystal panel obtained by curing the curable resin composition had low conformance to the base material. In Comparative Example 7, the average particle diameter of the spherical filler (D) was large, and thus the sealing material for a film liquid crystal panel obtained by curing the curable resin composition had low conformance to the base material. In Comparative Example 8, the curable resin composition did not contain the photopolymerization initiator (E) and thus had low photocurability, and the sealing material for a film liquid crystal panel obtained by curing the curable resin composition caused the alignment disorder of the liquid crystal in the harsh wet heat test, and had low conformance to the base material.

In Comparative Example 9, the blending mass ratio (B)/(C) was larger than the specified range, and thus the sealing material for a film liquid crystal panel obtained by curing the curable resin composition caused the alignment disorder of the liquid crystal in the harsh wet heat test. In Comparative Example 10, the blending mass ratio (B)/(C) was smaller than the specified range, and thus the curable resin composition exhibited a poor liquid crystal non-contaminating property, and the sealing material for a film liquid crystal panel obtained by curing the curable resin composition caused the alignment disorder of the liquid crystal in the harsh wet heat test, and had low conformance to the base material.

In Comparative Example 11, the ratio of a functional group concentration of thiol groups of (A) to the sum of a functional group concentration of a polymerizable unsaturated bond of (B) and a functional group concentration of a polymerizable unsaturated bond of (C) was larger than the specified range, and thus the sealing material for a film liquid crystal panel obtained by curing the curable resin composition caused the alignment disorder of the liquid crystal in the harsh wet heat test, and had low conformance to the base material after the temperature environment change acceleration test. In Comparative Example 12, the ratio of a functional group concentration of thiol groups of (A) to the sum of a functional group concentration of a polymerizable unsaturated bond of (B) and a functional group concentration of a polymerizable unsaturated bond of (C) was smaller than the specified range, and thus the sealing material for a film liquid crystal panel obtained by curing the curable resin composition caused the alignment disorder of the liquid crystal in the harsh wet heat test, and had low conformance to the base material.

In Comparative Example 13, the curable resin composition contained the polyfunctional (meth)acrylate of the component (F) as other components, and the blending mass ratio (B)/(C) was smaller than the specified range, and thus the curable resin composition exhibited a poor liquid crystal non-contaminating property, and the sealing material for a film liquid crystal panel obtained by curing the curable resin composition caused the alignment disorder of the liquid crystal in the harsh wet heat test, and had low conformance to the base material. In Comparative Example 14, the curable resin composition contained the surfactant of the component (G) as other components, the blending mass ratio (B)/(C) was larger than the specified range, and thus the sealing material for a film liquid crystal panel caused the alignment disorder of the liquid crystal in the harsh wet heat test. In Comparative Example 15, the curable resin composition contained the silane coupling agent of the component (H) as other components, the ratio of a functional group concentration of thiol groups of (A) to the sum of a functional group concentration of a polymerizable unsaturated bond of (B) and a functional group concentration of a polymerizable unsaturated bond of (C) was larger than the specified range, and thus the sealing material for a film liquid crystal panel obtained by curing the curable resin composition caused the alignment disorder of the liquid crystal in the harsh wet heat test, and had low conformance to the base material after the temperature environment change acceleration test.

## Claims

1. A curable resin composition for use in a sealing material for a film liquid crystal panel, comprising:
(A) a polyfunctional thiol compound having 2 to 6 thiol groups;
(B) a polyfunctional urethane (meth)acrylate compound having 2 to 3 (meth)acrylic groups;
(C) a polyfunctional allyl compound having 2 to 4 (meth)allyl groups;
(D) a spherical filler having an average particle diameter of 15 um or less; and
(E) a photopolymerization initiator,
wherein a blending mass ratio (B)/(C) of (B) to (C) is 0.1 to 1.0,
a ratio of a functional group concentration of thiol groups of (A) to a sum of a functional group concentration of a polymerizable unsaturated bond of (B) and a functional group concentration of a polymerizable unsaturated bond of (C) (thiol group/polymerizable unsaturated bond) is 0.5 to 3.0, and
an amount of (D) is 1 to 50 parts by mass relative to a total of 100 parts by mass of (A), (B), and (C).

2. A film liquid crystal panel having an end sealed with the curable resin composition according to claim 1.
